# EUROPEAN PATENT APPLICATION

(11) **EP 4 516 550 A1**
(43) Date of publication of application: **05.03.2025**
(21) Application number: 23794742.9
(22) Date of filing: 28.02.2023
(51) Int. Cl.: B60K 11/04, B60H 1/02, B60H 1/06, B60H 1/32, H01M 10/61

(54) **THERMAL MANAGEMENT SYSTEM, AND VEHICLE HAVING SAME**

(30) Priority: 28.04.2022 CN 202210456199
(71) Applicant: BYD Company Limited, Shenzhen, Guangdong 518118 (CN)
(72) Inventor: LIU, Jun, Shenzhen, Guangdong 518118 (CN); LIU, Mingliang, Shenzhen, Guangdong 518118 (CN); WANG, Hongjun, Shenzhen, Guangdong 518118 (CN); ZHANG, Nan, Shenzhen, Guangdong 518118 (CN); MENG, Fanchao, Shenzhen, Guangdong 518118 (CN)
(74) Representative: Mathys & Squire
(86) International application number: PCT/CN2023/078625
(87) International publication number: WO 2023/207306

(57) **Abstract**

A thermal management system (1), comprising an engine cooler (100), an exhaust gas recirculation system cooler (200), a thermostat(300), and a radiator (400). The engine cooler (100) is provided with a liquid inlet (110) and a liquid outlet (120); one end of the exhaust gas recirculation system cooler (200) is in communication with the liquid inlet (110) and the other end thereof is in communication with the liquid outlet (120); the exhaust gas recirculation system cooler (200) is connected to the engine cooler (100) in series; the thermostat (300) is connected to the radiator (400) in series and is connected to the exhaust gas recirculation system cooler (200) in parallel; the thermostat (300) is in communication with the liquid inlet (110); and the radiator (400) is in communication with the liquid outlet (120), such that the thermal management system (1) has low energy consumption, low engine oil consumption, and a high engine warming speed. The present invention further relates to a vehicle (2).

## Description

### CROSS-REFERENCE TO RELATED APPLICATIONS

The present disclosure claims priority to and benefits of Chinese Patent Application No. 202210456199.3 filed by the BYD Co., Ltd. on April 28, 2022 and entitled "THERMAL MANAGEMENT SYSTEM AND VEHICLE HAVING SAME".

### FIELD

The present disclosure relates to the field of vehicle technologies, and specifically, to a thermal management system and a vehicle having the same.

### BACKGROUND

In the related art, a thermal management system usually includes an engine cooler, an exhaust gas recirculation system cooler, and a thermostat. However, due to an improper structural arrangement of the thermal management system, a temperature of an engine increases slowly during warming, and a requirement of energy saving and emission reduction cannot be satisfied. In addition, the cooler and the exhaust gas recirculation system cooler are respectively arranged in two independent pipelines, and a coolant needs to be provided to the engine cooler and the exhaust gas recirculation cooler separately, resulting in a large flow requirement of a water pump, high power consumption of the water pump, and large engine oil consumption.

### SUMMARY

The present disclosure is intended to resolve at least one of technical problems existing in the related art. Therefore, an objective of the present disclosure is to provide a thermal management system. The thermal management system has advantages such as low energy consumption, low engine oil consumption, and a high warming speed.

The present disclosure further provides a vehicle having the thermal management system.

According to an embodiment of a first aspect of the present disclosure, a thermal management system includes: an engine cooler, the engine cooler being provided with a liquid inlet and a liquid outlet; an exhaust gas recirculation system cooler, an outlet of the exhaust gas recirculation system cooler being in communication with the liquid inlet, and an inlet of the exhaust gas recirculation system cooler being in communication with the liquid outlet; and a temperature adjustment and heat dissipation assembly, an inlet of the temperature adjustment and heat dissipation assembly being in communication with the inlet of the exhaust gas recirculation cooler, and an outlet of the temperature adjustment and heat dissipation assembly being in communication with the outlet of the exhaust gas recirculation cooler. The thermal management system according to this embodiment of the present disclosure has advantages such as low energy consumption, low engine oil consumption, and a high warming speed.

According to some examples of the present disclosure, the temperature adjustment and heat dissipation assembly includes a thermostat and a radiator that are connected in series. An inlet of the thermostat is in communication with the inlet of the exhaust gas recirculation system cooler, and an outlet of the radiator is in communication with the outlet of the exhaust gas recirculation system cooler.

According to some examples of the present disclosure, the thermal management system further includes: a warm air module, an outlet of the warm air module being in communication with the liquid inlet, and an inlet of the warm air module being in communication with the liquid outlet.

According to some examples of the present disclosure, the warm air module is connected to the exhaust gas recirculation system cooler in parallel; or the warm air module is connected to the exhaust gas recirculation system cooler in series.

According to some examples of the present disclosure, the thermal management system further includes: a battery cooling system; a first heat exchange plate, the first heat exchange plate having: a first heat exchange channel, the first heat exchange channel being connected to the battery cooling system; and a second heat exchange channel, a first end of the second heat exchange channel being in communication with the liquid inlet; and a three-way valve, the three-way valve including: a first opening, the first opening being in communication with the liquid inlet; a second opening, the second opening being in communication with a second end of the second heat exchange channel; and a third opening, the third opening being in communication with the warm air module, and the third opening being in communication with one of the first opening and the second opening selectively.

According to some examples of the present disclosure, the third opening is in communication with the warm air module through the exhaust gas recirculation system cooler.

According to some examples of the present disclosure, the thermal management system further includes: an air-conditioning system; and a second heat exchange plate, the second heat exchange plate having: a third heat exchange channel, the third heat exchange channel being connected to the battery cooling system; and a fourth heat exchange channel, the fourth heat exchange channel being connected to the air-conditioning system.

According to some examples of the present disclosure, the air-conditioning system includes: a compressor; a first heat exchanger, a first end of the first heat exchanger being connected to the compressor; and a second heat exchanger, a first end of the second heat exchanger being connected to a second end of the first heat exchanger through a switching valve, and a second end of the second heat exchanger being connected to the compressor. Two ends of the fourth heat exchange channel are respectively connected to the compressor and the second end of the first heat exchanger.

According to some examples of the present disclosure, an electronic expansion valve is arranged between the fourth heat exchange channel and the first heat exchanger.

According to some examples of the present disclosure, the engine cooler includes: a cylinder head water jacket, configured to cool a cylinder head of an engine, the liquid outlet being provided on the cylinder head water jacket; a cylinder block water jacket, configured to cool a cylinder block of the engine, an outlet of the cylinder block water jacket being in communication with the liquid outlet, and an inlet of the cylinder block water jacket being in communication with an inlet of the cylinder head water jacket; and a connection water jacket, the liquid inlet being provided on the connection waterjacket, and the liquid inlet being in communication with the inlet of the cylinder head water jacket and the inlet of the cylinder block water jacket separately.

According to some examples of the present disclosure, the cylinder block water jacket has a gas inlet side water jacket and a gas outlet side water jacket that are opposite to each other, the gas inlet side water jacket is connected to the connection water jacket, and the gas inlet side water jacket and the gas outlet side water jacket are in communication with the liquid outlet separately; The thermal management system further includes: a charger cooler, the gas outlet side water jacket being in communication with the charger cooler.

According to an embodiment of a second aspect of the present disclosure, a vehicle includes the thermal management system according to the embodiment of the first aspect of the present disclosure.

According to the embodiment of the second aspect of the present disclosure, through the thermal management system, the vehicle has advantages such as low energy consumption, low engine oil consumption, and a high warming speed.

Other aspects and advantages of the present disclosure are given in the following description, some of which become apparent from the following description or may be learned from practices of the present disclosure.

### BRIEF DESCRIPTION OF THE DRAWINGS

The foregoing and/or additional aspects and advantages of the present disclosure become apparent and comprehensible in the description of embodiments made with reference to the following accompanying drawings, where
FIG. 1 is a schematic structural diagram of a thermal management system according to a first embodiment of the present disclosure;
FIG. 2 is a schematic structural diagram of a thermal management system according to a second embodiment of the present disclosure;
FIG. 3 is a schematic structural diagram of a thermal management system according to a third embodiment of the present disclosure;
FIG. 4 is a schematic structural diagram of a thermal management system according to a fourth embodiment of the present disclosure;
FIG. 5 is a schematic structural diagram of an engine cooler of a thermal management system according to an embodiment of the present disclosure;
FIG. 6 is another schematic structural diagram of an engine cooler of a thermal management system according to an embodiment of the present disclosure; and
FIG. 7 is a schematic diagram of a vehicle according to an embodiment of the present disclosure.

In the drawings:
thermal management system 1,
engine cooler 100, liquid inlet 110, liquid outlet 120, cylinder block water jacket 130, gas inlet side water jacket 131, gas outlet side water jacket 132, outlet 133 of the cylinder block water jacket, inlet 134 of the cylinder block water jacket, cylinder head water jacket 140, inlet of the cylinder head water jacket 141, connection water jacket 150, charger cooler 160,
exhaust gas recirculation system cooler 200, outlet 201 of the exhaust gas recirculation system cooler, inlet 202 of the exhaust gas recirculation system cooler,
temperature adjustment and heat dissipation assembly 300, inlet 301 of the temperature adjustment and heat dissipation assembly, outlet 302 of the temperature adjustment and heat dissipation assembly, radiator 310, outlet 311 of the radiator, inlet 312 of the radiator, thermostat 320, inlet 321 of the thermostat, outlet 322 of the thermostat,
warm air module 400, outlet 401 of the warm air module, inlet 402 of the warm air module,
battery cooling system 500, battery pack 510,
first heat exchange plate 600, first heat exchange channel 610, second heat exchange channel 620, first end 621 of the second heat exchange channel, second end 622 of the second heat exchange channel,
three-way valve 700, first opening 710, second opening 720, third opening 730,
air-conditioning system 800, compressor 810, first heat exchanger 820, first end 821 of the first heat exchanger, second end 822 of the first heat exchanger, second heat exchanger 830, first end 831 of the second heat exchanger, second end 832 of the second heat exchanger, switching valve 840, electronic expansion valve 850, expansion valve 860,
second heat exchange plate 900, third heat exchange channel 910, fourth heat exchange channel 920, and
vehicle 2.

### DETAILED DESCRIPTION

The following describes embodiments of the present disclosure in detail. Examples of the embodiments are shown in the accompanying drawings, and same or similar reference numerals in all the accompanying drawings indicate same or similar components or components having same or similar functions. The embodiments described below with reference to the accompanying drawings are exemplary, and are merely intended to explain the present disclosure and cannot be construed as a limitation to the present disclosure.

In descriptions of the present disclosure, it should be understood that direction or position relationships indicated by terms such as "center", "above", "below", "front", "back", "left", "right", "vertical", "horizontal", "top", "bottom", "inner", and "outer" are direction or position relationships based on the accompanying drawings, and are used only for conveniently describing the present disclosure and simplifying descriptions, instead of indicating or suggesting that a represented apparatus or component needs to have a particular direction or is constructed and operated in a particular direction, and therefore shall not be understood as limiting the present disclosure.

It should be noted that, terms "first" and "second" are used only for description objectives, and shall not be construed as indicating or implying relative importance or implying a quantity of indicated technical features. Therefore, a feature restricted by "first " or "second" may explicitly or implicitly include one or more such features. Further, in the descriptions of the present disclosure, unless stated otherwise, the meaning of "a plurality of" is two or more than two.

A thermal management system 1 according to the embodiments of the present disclosure is described below with reference to the accompanying drawings.

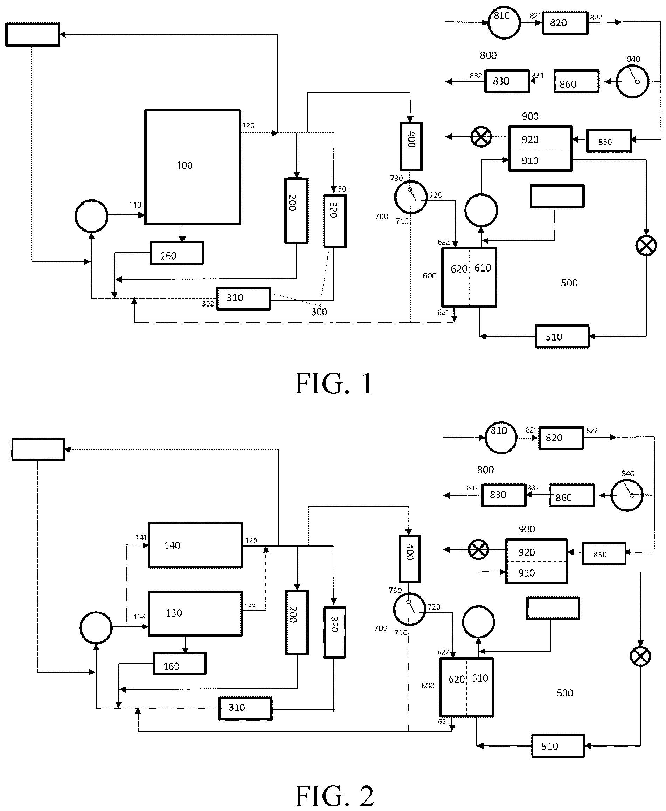

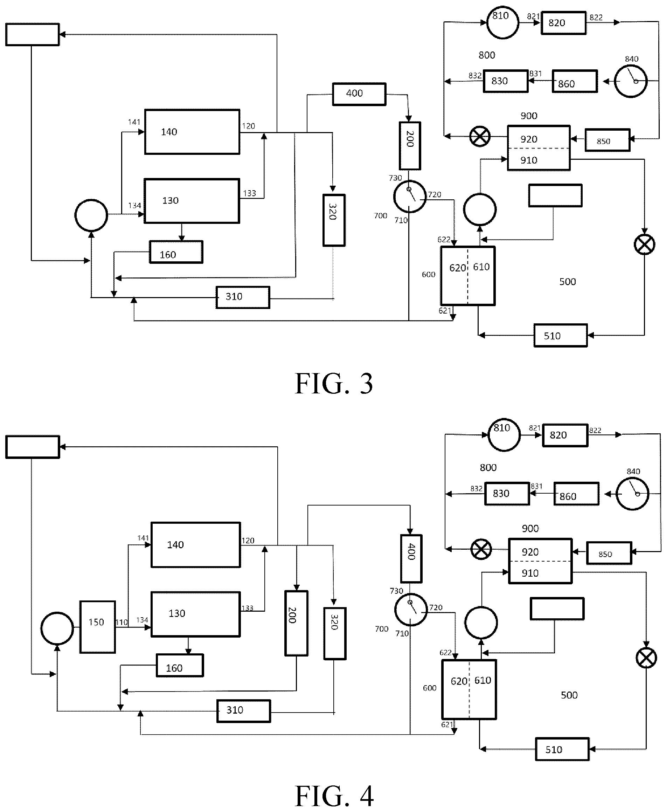

As shown in FIG. 1 to FIG. 4, a thermal management system 1 according to an embodiment of the present disclosure includes an engine cooler 100, an exhaust gas recirculation system cooler 200, and a temperature adjustment and heat dissipation assembly 300.

The engine cooler 100 has a liquid inlet 110 and a liquid outlet 120. An outlet 201 of the exhaust gas recirculation system cooler 200 is in communication with the liquid inlet 110, and an inlet 202 of the exhaust gas recirculation system cooler 200 is in communication with the liquid outlet 120. That is, the exhaust gas recirculation system cooler 200 is connected to the engine cooler 100 in series. An inlet 301 of the temperature adjustment and heat dissipation assembly 300 is in communication with the inlet202 of the exhaust gas recirculation system cooler 200, and an outlet 302 of the temperature adjustment and heat dissipation assembly 300 is in communication with the outlet 201 of the exhaust gas recirculation system cooler 200. That is, the temperature adjustment and heat dissipation assembly 300 is connected to the exhaust gas recirculation system cooler 200 in series.

A part of coolant flowing out from the liquid outlet 120 of the engine cooler 100 may flow to the temperature adjustment and heat dissipation assembly 300, and then flow back to the engine cooler 100 through the liquid inlet 110. The other part of the coolant may flow to the exhaust gas recirculation system cooler 200 and then flow back to the engine cooler 100 after heat exchange. The engine cooler 100 can exchange heat with the engine, to quickly cool the engine. In other words, when a temperature of the engine is excessively high, the engine can be quickly cooled, so that normal operation of the engine is ensured.

In the thermal management system 1 according to this embodiment of the present disclosure, the outlet 201 of the exhaust gas recirculation system cooler 200 is in communication with the liquid inlet 110, and the inlet of the exhaust gas recirculation system cooler 200 is in communication with the liquid outlet 120. The exhaust gas recirculation system cooler 200 is connected to the engine cooler 100 in series. In this way, the engine cooler 100 and the exhaust gas recirculation cooler 200 are connected in a same pipeline, and the coolant in the engine cooler 100 may directly flow into the exhaust gas recirculation cooler 200. In other words, there is no need to add an electronic water pump to provide a driving force of the coolant for the exhaust gas recirculation system cooler 200. Therefore, both a cooling requirement of the engine cooler 100 and a cooling requirement of the exhaust gas recirculation system cooler 200 can be satisfied, and an overall flow rate of the coolant can be reduced, thereby reducing a flow rate of the electronic water pump, and further reducing power consumption of the electronic water pump and reducing engine oil consumption.

In addition, the temperature adjustment and heat dissipation assembly 300 is connected to the exhaust gas recirculation system cooler 200 in series. Therefore, the coolant flowing out from the engine cooler 100 may flow through an exhaust gas recirculation system and may flow through the temperature adjustment and heat dissipation assembly 300. In other words, there are two flow paths for the coolant flowing out from the engine cooler 100. In this way, in a warming process, the temperature adjustment and heat dissipation assembly 300 may be turned off. In this case, the coolant flowing out from the engine cooler 100 does not pass through the temperature adjustment and heat dissipation assembly 300. In addition, a rotation speed of the electronic water pump may be reduced, so that less coolant enters the engine cooler 100, and the coolant flowing through the exhaust gas recirculation system cooler 200 can absorb heat of the exhaust gas recirculation system for warm-up of the engine. In this way, the engine is quickly warmed, warm-up efficiency of the engine is greatly improved, the engine oil consumption is further reduced, and emission of noxious gases can be reduced.

Therefore, the thermal management system 1 according to this embodiment of the present disclosure has advantages such as low energy consumption, low engine oil consumption, and a high warming speed.

In some embodiments of the present disclosure, as shown in FIG. 1 to FIG. 4, a temperature adjustment and heat dissipation assembly 300 includes a thermostat 320 and a radiator 310 that are connected in series. To be specific, an outlet 322 of the thermostat is in communication with an inlet 312 of the radiator 310, an inlet of the thermostat 320 is in communication with the inlet 202 of the exhaust gas recirculation cooler 200, and an outlet of the radiator 310 is in communication with the outlet 201 of the exhaust gas recirculation cooler 200. That is, the thermostat 320 and the radiator 310 are on a same pipeline, and the exhaust gas recirculation system cooler 200 is on another pipeline. A part of the coolant flowing out from the liquid outlet 120 of the engine cooler 100 may flow to the thermostat 320 and the radiator 310, and then flow back to the engine cooler 100 through the liquid inlet 110. The other part of the coolant may flow to the exhaust gas recirculation system cooler 200, and then flow back to the engine cooler 100 after heat exchange. In other words, there are two flow paths for the coolant flowing out from the engine cooler 100. In this way, in the warming process, the thermostat 300 may be turned off. In this case, the coolant flowing out from the engine cooler 100 does not pass through the radiator 310. In addition, the rotation speed of the electronic water pump may be reduced, so that less coolant enters the engine cooler 100, and the coolant flowing through the exhaust gas recirculation system cooler 200 can absorb the heat of the exhaust gas recirculation system for the warm-up of the engine. In this way, the engine is quickly warmed.

In some specific embodiments of the present disclosure, as shown in FIG. 1 to FIG. 4, the thermal management system 1 further includes a warm air module 400. An outlet 401 of the warm air module 400 is in communication with the liquid inlet 110, and an inlet 402 of the warm air module 400 is in communication with the liquid outlet 120. That is, the warm air module 400 is connected to the engine cooler 100 in series. Therefore, the warm air module 400 and the engine cooler 100 may form a cycle. The coolant in the engine cooler 100 flowing through the warm air module 400 can heat a vehicle cabin, so that heat of the engine may be used for heating the vehicle cabin, thereby improving utilization of the heat of the engine, and reducing energy consumption.

In some specific embodiments of the present disclosure, as shown in FIG. 1 to FIG. 4, the warm air module 400 is connected to the exhaust gas recirculation system cooler 200 in parallel; or the warm air module 400 is connected to the exhaust gas recirculation system cooler 200 in series. In this way, a connection between the warm air module 400 and the exhaust gas recirculation system cooler 200 is simpler. In other words, a part of the coolant flowing out from the engine cooler 100 may flow to the exhaust gas recirculation system cooler 200, and the other part of the coolant may flow to the warm air module 400. In this way, the cooling liquid flowing through the warm air module 400, the cooling liquid flowing through the exhaust gas recirculation system cooler 200, and the cooling liquid shared by the engine cooler 100, and the heat dissipation device and an additional electronic water pump is not required for providing the driving force of the coolant for the exhaust gas recirculation system cooler 200. A flow rate and a quantity of components of the electronic water pump are reduced while the cooling requirement of the exhaust gas recirculation system cooler 200 is ensured. In this way, power consumption of the electronic water pump is also reduced to some extent, so that the engine oil consumption is reduced, and a vehicle structure is simplified, thereby reducing costs.

In some specific embodiments of the present disclosure, as shown in FIG. 1 to FIG. 4, the thermal management system 1 further includes a battery cooling system 500, a first heat exchange plate 600, and a three-way valve 700.

The first heat exchange plate 600 has a first heat exchange channel 610 and a second heat exchange channel 620. The first heat exchange channel 610 is connected to the battery cooling system 500, and a first end 621 of the second heat exchange channel 620 is in communication with the liquid inlet 110. The three-way valve 700 includes a first opening 710, a second opening 720, and a third opening 730. The first opening 710 is in communication with the liquid inlet 110, the second opening 720 is in communication with a second end 622 of the second heat exchange channel 620, and the third opening 730 is in communication with the warm air module 400. The third opening 730 may be in communication with one of the first opening 710 and the second opening 720 selectively.

In other words, the coolant in the engine cooler 100 may flow through the second heat exchange channel 620, and a coolant in the battery cooling system 500 may flow through the first heat exchange channel 610. In this way, the coolant in the engine cooler 100 and the coolant in the battery cooling system 500 may exchange heat in the first heat exchange plate 600, so that the battery cooling system 500 is heated by using the engine cooler 100, thereby further improving a temperature increasing rate of the battery cooling system 500, and ensuring battery efficiency. In this way, when the battery pack 510 is heated, no additional energy is required, so that efficiency of the battery pack 510 is improved, and no additional power consumption is required, thereby improving utilization of energy.

When the second opening 720 is in communication with the first opening 710, the engine cooler 100 is out of communication with the first heat exchange plate 600. In other words, the first heat exchange plate 600 does not participate in a loop of the coolant in the engine cooler 100, the engine cooler 100 and the battery cooling system 500 do not exchange heat, and the first heat exchange plate 600 is equivalent to a pipeline. When the second opening 720 is in communication with the third opening 730, the engine cooler 100 and the battery cooling system 500 exchange heat through the first heat exchange plate 600, and the engine cooler 100 may heat the battery cooling system 500.

In some specific embodiments of the present disclosure, as shown in FIG. 1 to FIG. 4, the third opening 730 is in communication with the warm air module 400 through the exhaust gas recirculation system cooler 200.

In this way, when the battery pack 510 needsto be heated, before flowing through the second heat exchange channel 620, the coolant exchanges heat with the exhaust gas recirculation system cooler 200, to absorb the heat of the exhaust gas recirculation system. Therefore, a temperature of the coolant flowing through the second heat exchange channel 620 is higher, and the temperature of the coolant entering the second heat exchange channel 620 of the first heat exchange plate 600 can be quickly increased. In particular, when starts at a low-temperature environment, heat may be quickly provided for the battery cooling system 500, so that the battery pack 510 quickly reaches a suitable temperature, thereby ensuring the battery efficiency. In addition, after the exhaust gas recirculation system cooler 200 is connected to the warm air module 400 in series, an electronic water pump does not need to be added to the exhaust gas recirculation system cooler 200, and the electronic water pump does not need to additionally increase the flow rate. In other words, the same water pump may be shared by the exhaust gas recirculation system cooler 200 and the engine cooler 100. To some extent, power consumption of the electronic water pump can be reduced, thereby reducing the engine oil consumption.

In some specific embodiments of the present disclosure, as shown in FIG. 1 to FIG. 4, the thermal management system 1 further includes an air-conditioning system 800 and a second heat exchange plate 900.

The second heat exchange plate 900 has a third heat exchange channel 910 and a fourth heat exchange channel 920. The third heat exchange channel 910 is connected to the battery cooling system 500, and the fourth heat exchange channel 920 is connected to the air-conditioning system 800.

In other words, the coolant in the battery cooling system 500 may flow through the third heat exchange channel 910, a cooling medium in the air-conditioning system 800 may flow through the fourth heat exchange channel 920, and the coolant in the third heat exchange channel 910 may exchange heat with the cooling medium in the fourth heat exchange channel 920. In this way, when an environmental temperature is relatively low, the cooling medium in the air-conditioning system 800 may be used for heating the coolant in the battery cooling system 500, to increase the temperature of the coolant in the battery cooling system 500, and the battery pack 510 is heated by using the coolant in the battery cooling system 500, ensuring that the battery pack 510 is in a proper operating temperature range. When the environmental temperature is relatively high, the cooling medium in the air-conditioning system 800 may be used for cooling the coolant in the battery cooling system 500, to reduce the temperature of the coolant in the battery cooling system 500, and the battery pack 510 is cooled by using the coolant in the battery cooling system 500, keeping the battery pack 510 in a normal operating state.

In addition, through arrangement of the first heat exchange plate 600 and the second heat exchange plate 900, the engine cooler 100 and the air-conditioning system 800 may simultaneously exchange heat with the battery cooling system 500, thereby further improving a temperature increasing rate of the battery cooling system 500, and quickly increasing the temperature of the battery pack 510. Therefore, when the battery pack 510 is heated, additional energy is not required, so that the efficiency of the battery pack 510 is improved, and additional power consumption is notrequired. Certainly, it may be understood that when the battery pack 510 needs to be heated, only the engine cooler 100 may be used to exchange heat with the battery cooling system 500, and the air-conditioning system 800 does not exchange heat with the battery cooling system 500, or only the air-conditioning system 800 may be used to exchange heat with the battery cooling system 500, and the engine cooler 100 does not exchange heat with the battery cooling system 500.

In some specific embodiments of the present disclosure, as shown in FIG. 1 to FIG. 4, the air-conditioning system 800 includes a compressor 810, a first heat exchanger 820, and a second heat exchanger 830.

A first end 821 of the first heat exchanger 820 is connected to the compressor 810, a first end 831 of the second heat exchanger 830 is connected to a second end 822 of the first heat exchanger 820 through a switching valve 840, and a second end 832 of the second heat exchanger 830 is connected to the compressor 810. Two ends of the fourth heat exchange channel 920 are respectively connected to the compressor 810 and the second end 822 of the first heat exchanger 820. An expansion valve is arranged between the first heat exchanger 820 and the second heat exchanger 830. The expansion valvemay be a thermal expansion valve. The expansion valve may be located between the switching valve 840 and the second heat exchanger 830.

For example, the first heat exchanger 820 may serve as a condenser of the air-conditioning system 800 for heating, and the second heat exchanger 830 may serve as an evaporator of the air-conditioning system 800 for refrigerating. In addition, based on a signal of a temperature sensor in the battery pack 510, a battery management system (BMS) sends a request signal of cooling, heating, or equalization to a micro control unit (MCU). Based on the request signal of the BMS and a temperature pressure sensor of the air-conditioning system 800 and based on experimental and simulation parameters, the MCU sets temperature targets and limits of all parts, to control the compressor 810, an electronic expansion valve 850 described below, and the electronic water pump, to achieve an optimal temperature and an energy consumption target in various operating conditions.

During refrigeration of the air-conditioning system 800, a part of the coolant flowing out from the first heat exchanger 820 flows through the fourth heat exchange channel 920 and exchanges heat with the coolant in the third heat exchange channel 910, thereby cooling the battery cooling system 500. The other part of the coolant flows through the switching valve 840 and the second heat exchanger 830. Therefore, the compressor 810, the first heat exchanger 820, the switching valve 840, and the second heat exchanger 830 form a cooling medium loop. The first heat exchanger 820 is a condenser, and the second heat exchanger 830 is an evaporator configured to refrigerate a vehicle cabin.

In some specific embodiments of the present disclosure, as shown in FIG. 1 to FIG. 4, an electronic expansion valve 850 is arranged between the fourth heat exchange channel 920 and the first heat exchanger 820. In this way, the electronic expansion valve 850 may control connection and disconnection between the fourth heat exchange channel 920 and the air-conditioning system 800, so that when the temperature of the battery pack 510 is normal, and the battery pack 510 does not need to be heated or cooled, the coolant in the air-conditioning system 800 does not exchange heat with the battery cooling system 500.

When the air-conditioning system 800 performs auxiliary cooling on the battery cooling system 500, the electronic expansion valve 850is switched on, a low-temperature and low-pressure gas passes through the compressor 810 and becomes a high-temperature and high-pressure gas. The high-temperature and high-pressure gas passes through the first heat exchanger 820 and becomes a high-pressure and low-temperature liquid. A part of the high-pressure and low-temperature liquid enters the second heat exchanger 830, so that the compressor 810, the first heat exchanger 820, and the second heat exchanger 830 form a cooling medium loop for refrigerating a vehicle cabin. The other part of the high-pressure and low-temperature liquid enters the fourth heat exchange channel 920 through the electronic expansion valve 850 to exchange heat with the battery cooling system 500, and then becomes a low-pressure and low-temperature gas into the compressor 810 to complete a cycle. In this case, the first heat exchanger 820 is a condenser, and the second heat exchanger 830 is an evaporator.

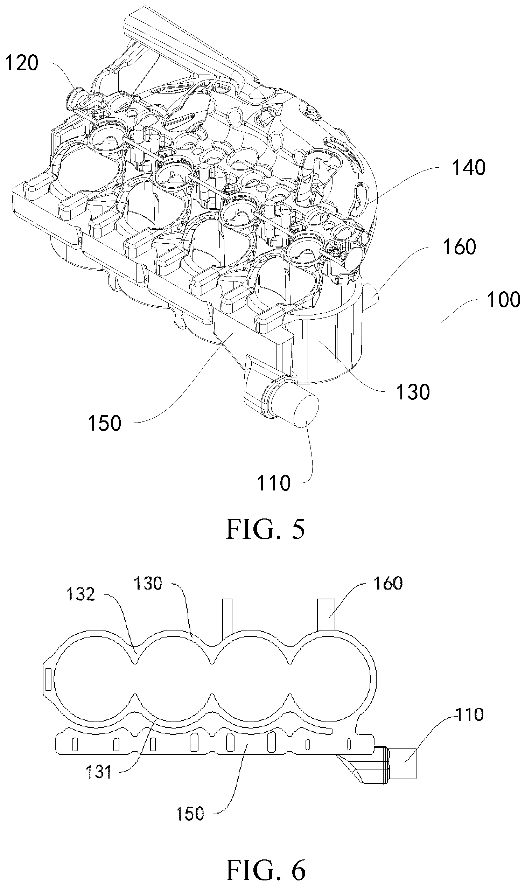

In some specific embodiments of the present disclosure, as shown in FIG. 1 to FIG. 6, the engine cooler 100 includes a cylinder head water jacket 140, a cylinder block water jacket 130, and a connection water jacket 150.

The cylinder head water jacket 140 is configured to cool a cylinder head of an engine, and a liquid outlet 120 is provided on the cylinder head water jacket 140. The cylinder block water jacket 130 is configured to cool a cylinder block of the engine. An outlet 133 of the cylinder block water jacket 13 is in communication with the liquid outlet 120. An inlet 134 of the cylinder block water jacket 130 is in communication with an inlet 141 of the cylinder head water jacket 140. All parts of the engine have a good cooling effect, and are cooled more fully. A liquid inlet 110 is provided on the connection water jacket 150. The liquid inlet 110 is communication with the inlet 141 of the cylinder head water jacket 140 and the inlet 133 of the cylinder block water jacket 130 respectively. In other words, the cylinder head water jacket 140 and the cylinder block waterjackets 130 are connected in parallel, and are connected to the connection water jackets 150 in series.

It should be noted that, the cylinder block water jacket 130 and the cylinder head water jacket 140 are connected in parallel, and the cylinder block water jacket 130 and the cylinder head water jacket 140 are connected to the connection water jacket 150 in series. It means that after the cylinder block water jacket 130 is connected to the cylinder head water jacket 140 in parallel, the whole of the two is in communication with the connection water jacket 150. A coolant flowing out through the connection water jacket 150 may flow to the cylinder block water jacket 130 and the cylinder head water jacket 140 respectively. The coolant flowing out of the cylinder block water jacket 130 and the cylinder head water jacket 140 may be gathered and then divided into three ways. One way flows to an expansion kettle to remove gas generated in a system of the engine cooler 100, and replenishes a motor pump in the engine cooler 100 through the expansion kettle, to maintain a flow pressure of the coolant in the engine cooler 100 and prevent boiling or cavitation of the electronic water pump. One way passes through the warm air module 400, and enters the exhaust gas recirculation system cooler 200. If the battery cooling system 500 has a heating requirement, the third opening 730 of the three-way valve 700 is in communication with the second opening 720, and the coolant in the warm air module 400 flows into the first heat exchange plate 600 and exchanges heat with the battery cooling system 500, and then flows back to the engine cooler 100. If the battery cooling system 500 does not have the heating requirement, the third opening 730 of the three-way valve 700 is in communication with the first opening 710, and the coolant in the warm air module 400 flows directly back to the engine cooler 100. One way enters the thermostat 300. If the thermostat 300 is turned on, the coolant enters the radiator 310 for heat dissipation and flows back to the engine cooler 100 to complete the cycle. If the thermostat 300 is not turned on, the radiator 310 does not participate in the cycle.

In addition, through adjustment of a size of a communication port between the connection water jacket 150 and the cylinder block water jacket 130 and a size of a communication port between the connection water jacket 150 and the cylinder head water jacket 140, a flow rate from the connection water jacket 150 to the cylinder block water jacket 130 and a flow rate in the cylinder head water jacket 140 can be properly distributed, so that warming time of the engine can be reduced during start-up in a low-temperature environment, thereby reducing oil consumption and emission of noxious gases. For example, if the communication port between the connection water jacket 150 and the cylinder block water jacket 130 is enlarged, a flow rate of the coolant entering the cylinder block water jacket 130 is increased, and a flow rate of the coolant entering the cylinder head water jacket 140 is reduced. In this way, a cooling rate of the engine cooler 100 to the cylinder block and the cylinder head of the engine can be adjusted.

In some specific embodiments of the present disclosure, as shown in FIG. 1 to FIG. 6, the thermal management system 1 further includes a charger cooler 160.

The cylinder block water jacket 130 has a gas inlet side water jacket 131 and a gas outlet side water jacket 132 that are opposite to each other. The gas inlet side water jacket 131 is connected to the connection water jacket 150. The gas outlet side water jacket 132 is in communication with the charger cooler 160. The gas inlet side water jacket 131 and the gas outlet side water jacket 132 are in communication with the liquid outlet 120 separately. In this way, the coolant flowing out of the water outlet side water jacket 132 may flow into the charger cooler 160. The charger cooler 160 can cool a charger, to avoid an excessively high temperature of the charger, so that the charger can operate normally.

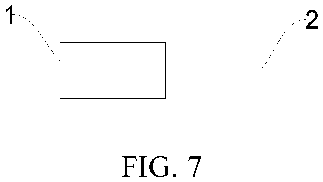

As shown in FIG. 7, according to a vehicle 2 in an embodiment of a second aspect of the present disclosure, the vehicle 2 includes the thermal management system 1 according to the embodiment of the first aspect of the present disclosure.

According to this embodiment of the present disclosure, through the thermal management system 1, the vehicle 2 has advantages such as low energy consumption, low engine oil consumption, and a high warming speed.

Other compositions and operations of the thermal management system 1 and the vehicle 2 having the same according to the embodiments of the present disclosure are known to a person of ordinary skill in the art, and are not described herein in detail.

In the description of this specification, the description of the referenceterms such as "an embodiment", "some embodiments", "exemplary embodiments", "an example", "a specific example", or "some examples" means that the specific features, structures, materials, or characteristics described with reference to the embodiment or example are included in at least one embodiment or example of the present disclosure. In this specification, schematic descriptions of the foregoing terms do not necessarily direct at a same embodiment or example. Moreover, the specific features, structures, materials, or characteristics described may be combined in any one or more embodiments or examples in an appropriate manner.

Although the embodiments of the present disclosure have been shown and described, a person of ordinary skill in the art may understand that various changes, modifications, replacements, and variations may be made to the embodiments without departing from the principles and spirit of the present disclosure, and the scope of the present disclosure is as defined by the appended claims and their equivalents.

## Claims

1. A thermal management system (1), comprising:
an engine cooler (100), the engine cooler (100) being provided with a liquid inlet (110) and a liquid outlet (120);
an exhaust gas recirculation system cooler (200), an outlet (201) of the exhaust gas recirculation system cooler (200) being in communication with the liquid inlet (110), and an inlet (202) of the exhaust gas recirculation system cooler (200) being in communication with the liquid outlet (120); and
a temperature adjustment and heat dissipation assembly (300), an inlet (301) of the temperature adjustment and heat dissipation assembly (300) being in communication with the inlet (202) of the exhaust gas recirculation cooler (200), and an outlet (302) of the temperature adjustment and heat dissipation assembly (300) being in communication with the outlet (201) of the exhaust gas recirculation cooler (200).

2. The thermal management system (1) accordingto claim 1, wherein the temperature adjustment and heat dissipation assembly (300) comprises a thermostat (320) and a radiator (310) that are connected in series, an inlet (321) of the thermostat (320) is in communication with the inlet 202 of the exhaust gas recirculation cooler (200), and an outlet (311) of the radiator (310) is in communication with the outlet 201 of the exhaust gas recirculation cooler (200).

3. The thermal management system (1) according to claim 2, further comprising:
a warm air module (400), an outlet (401) of the warm air module (400) being in communication with the liquid inlet (110), and an inlet (402) of the warm air module (400) being in communication with the liquid outlet (120).

4. The thermal management system according to claim 3, wherein the warm air module (400) is connected to the exhaust gas recirculation system cooler (200) in parallel; or
the warm air module (400) is connected to the exhaust gas recirculation system cooler (200) in series.

5. The thermal management system (1) according to claim 3 or 4, further comprising:
a battery cooling system (500);
a first heat exchange plate (600), the first heat exchange plate (600) having:
a first heat exchange channel (610), the first heat exchange channel (610) being connected to the battery cooling system (500); and
a second heat exchange channel (620), a first end (621) of the second heat exchange channel (620) being in communication with the liquid inlet (110); and
a three-way valve (700), the three-way valve (700) comprising:
a first opening (710), the first opening (710) being in communication with the liquid inlet (110);
a second opening (720), the second opening (720) being in communication with a second end (622) of the second heat exchange channel (620); and
a third opening (730), the third opening (720) being in communication with the warm air module (400), and the third opening (730) being in communication with one of the first opening (710) and the second opening (720) selectively.

6. The thermal management system (1) according to claim 5, wherein the third opening (730) is in communication with the warm air module (400) through the exhaust gas recirculation system cooler (200).

7. The thermal management system (1) according to any one of claims 1 to 6, further comprising:
an air-conditioning system (800); and
a second heat exchange plate (900), the second heat exchange plate (900) having:
a third heat exchange channel (910), the third heat exchange channel (910) being connected to the battery cooling system (500); and
a fourth heat exchange channel (920), the fourth heat exchange channel (920) being connected to the air-conditioning system (800).

8. The thermal management system (1) according to claim 7, wherein the air-conditioning system (800) comprises:
a compressor (810);
a first heat exchanger (820), a first end (821) of the first heat exchanger (820) being connected to the compressor (810); and
a second heat exchanger (830), a first end (831) of the second heat exchanger (830) being connected to a second end (822) of the first heat exchanger (820) through a switching valve (840), and a second end (832) of the second heat exchanger (830) being connected to the compressor (810),
wherein two ends of the fourth heat exchange channel (920) are respectively connected to the compressor (810) and the second end (822) of the first heat exchanger (820).

9. The thermal management system (1) according to claim 8, wherein an electronic expansion valve (850) is arranged between the fourth heat exchange channel (920) and the first heat exchanger (820).

10. The thermal management system (1) according to any one of claims 1 to 9, wherein the engine cooler (100) comprises:
a cylinder head water jacket (140), configured to cool a cylinder head of an engine, the liquid outlet (120) is provided on the cylinder head water jacket (140);
a cylinder block waterjacket (130), configured to cool a cylinder block of the engine, an outlet (133) of the cylinder block water jacket (130) is in communication with the liquid outlet (120), and an inlet (134) of the cylinder block water jacket (130) is in communication with an inlet (141) of the cylinder head water jacket (140); and
a connection water jacket (150), the liquid inlet (110) being provided on the connection water jacket (150), and the liquid inlet (110) is in communication with the inlet (141) of the cylinder head water jacket (140) and the inlet (134) of the cylinder block water jacket (130) separately.

11. The thermal management system (1) according to claim 10, wherein the cylinder block water jacket (130) has a gas inlet side water jacket (131) and a gas outlet side water jacket (132) that are opposite to each other, the gas inlet side water jacket (131) is connected to the connection water jacket (150), and the gas inlet side water jacket (131) and the gas outlet side water jacket (132) are in communication with the liquid outlet (120) separately;
the thermal management system (1) further comprising:
a charger cooler (160), the gas outlet side water jacket (132) being in communication with the charger cooler (160).

12. A vehicle (2), comprising the thermal management system (1) according to any one of claims 1 to 11.
